(19) Europäisches Patentamt
European Patent Office
Office européen des brevets

(11) Veröffentlichungsnummer: **0 646 617 B1**

(12) **EUROPÄISCHE PATENTSCHRIFT**

(45) Veröffentlichungstag der Patentschrift: **15.11.95**

(51) Int. Cl.[6]: **C08G 77/445**, C08G 63/695, C08G 77/38

(21) Anmeldenummer: **94111760.8**

(22) Anmeldetag: **28.07.94**

# (54) Estergruppen aufweisende Organopolysiloxane.

(30) Priorität: **28.07.93 DE 4325359**

(43) Veröffentlichungstag der Anmeldung:
**05.04.95 Patentblatt 95/14**

(45) Bekanntmachung des Hinweises auf die Patenterteilung:
**15.11.95 Patentblatt 95/46**

(84) Benannte Vertragsstaaten:
**AT BE CH DE ES FR GB IT LI NL**

(56) Entgegenhaltungen:
**EP-A- 0 473 812**
**EP-A- 0 508 491**
**WO-A-92/05854**
**DE-A- 4 011 942**

(73) Patentinhaber: **Wacker-Chemie GmbH**
**Hanns-Seidel-Platz 4**
**D-81737 München (DE)**

(72) Erfinder: **Herzig, Christian, Dr.**
**Schröckenbauer 1**
**D-83373 Taching am See (DE)**
Erfinder: **Burger, Willibald, Dr.**
**Elisabethstrasse 14**
**D-84489 Burghausen (DE)**
Erfinder: **Deubzer, Bernward, Dr.**
**Virchowstrasse 14**
**D-84489 Burghausen (DE)**
Erfinder: **Blöchl, Martina**
**Dorfstrasse 16**
**D-84367 Tann (DE)**

**EP 0 646 617 B1**

Anmerkung: Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

## Beschreibung

Die Erfindung betrifft Estergruppen aufweisende Organopolysiloxane, Verfahren zu deren Herstellung und deren Verwendung. Unter dem Begriff Organopolysiloxane sollen im Rahmen dieser Erfindung auch oligomere Siloxane verstanden werden.

In US 4,613,641 A (BYK-Chemie GmbH) bzw. der entsprechenden DE 34 27 208 A werden Polyestergruppen aufweisende Siloxane als verlaufsfördernde Zusatzmittel für Lacke und Formmassen beschrieben, in denen die Polyestergruppen über zweiwertige Reste mit den Siliciumatomen des Siloxans verbunden sind, wobei eine Siloxaneinheit höchstens eine Polyesterkette aufweisen kann. In US 4,985,511 A (University of Florida) werden carbonsäurefunktionelle Siloxane beschrieben, auf die Pivalolacton durch Ringöffnungspolymerisation aufpolymerisiert wird. Dabei werden nur Seitenketten mit Säure- oder Esterendgruppen erhalten. Des weiteren werden in Polym. Prepr., Am. Chem. Soc., Div. Polym. Chem. 26 (1985) Nr. 1, 251-2 (J.S. Riffle), aus $\alpha,\omega$-Bis(4-hydroxybutyl)polydimethylsiloxan durch Aufpolymerisieren von $\epsilon$-Caprolacton Blockcopolymere hergestellt, die in Polyurethane übergeführt werden.

Gegenstand der Erfindung sind Estergruppen aufweisende Organopolysiloxane aus Einheiten der allgemeinen Formel

$$R_aA_bSiO_{\frac{4-a-b}{2}} \qquad (I),$$

wobei

- R gleich oder verschieden sein kann und einwertige, SiC-gebundene Kohlenwasserstoffreste mit 1 bis 18 Kohlenstoffatomen bedeutet,
- A gleich oder verschieden sein kann und einen Rest der allgemeinen Formel

$$\begin{array}{l} -\underset{\|}{C}H_{1-x}\{R^1O(R^2O)_v[\overset{O}{\overset{\|}{C}}(O)_cR^3O]_sH\}_x \\ \;CH_{2-y}\{R^1O(R^2O)_w[\underset{O}{\underset{\|}{C}}(O)_cR^3O]_tH\}_y \end{array} \qquad (II)$$

bedeutet, worin

- $R^1$ gleich oder verschieden sein kann und zweiwertige Kohlenwasserstoffreste mit 1 bis 6 Kohlenstoffatomen bedeutet,
- $R^2$ gleich oder verschieden sein kann und zweiwertige Kohlenwasserstoffreste mit 2 bis 4 Kohlenstoffatomen bedeutet,
- $R^3$ gleich oder verschieden sein kann und zweiwertige Kohlenwasserstoffreste mit 2 bis 6 Kohlenstoffatomen bedeutet,
- c 0 oder 1 ist,
- v 0 oder eine ganze Zahl ist,
- w 0 oder eine ganze Zahl ist, wobei die Summe aus v und w 0 oder eine ganze Zahl von 1 bis 16 ist,
- s 0 oder eine ganze Zahl ist,
- t 0 oder eine ganze Zahl ist, wobei die Summe aus s und t eine ganze Zahl von 1 bis 20 ist,
- x 0 oder 1 ist,
- y 0 oder 1 ist, wobei die Summe aus x und y 1 oder 2 ist,
- a 0, 1, 2 oder 3 ist und
- b 0, 1 oder 2 ist,

mit der Maßgabe, daß die Summe aus a und b kleiner oder gleich 3 ist und das Organopolysiloxan pro Molekül mindestens einen Rest A aufweist.

Beispiele für Rest R sind Alkylreste, wie der Methyl-, Ethyl-, n-Propyl-, iso-Propyl-, n-Butyl-, iso-Butyl-, tert.-Butyl-, n-Pentyl-, iso-Pentyl-, neo-Pentyl-, tert.-Pentylrest, Hexylreste, wie der n-Hexylrest, Heptylreste, wie der n-Heptylrest, Octylreste, wie der n-Octylrest und iso-Octylreste, wie der 2,2,4-Trimethylpentylrest, Nonylreste, wie der n-Nonylrest, Decylreste, wie der n-Decylrest, Dodecylreste, wie der n-Dodecylrest,

Octadecylreste, wie der n-Octadecylrest; Alkenylreste, wie der Vinyl- und der Allylrest; Cycloalkylreste, wie Cyclopentyl-, Cyclohexyl-, Cycloheptylreste und Methylcyclohexylreste; Arylreste, wie der Phenyl-, Naphthyl-, Anthryl- und Phenanthrylrest; Alkarylreste, wie o-, m-, p-Tolylreste, Xylylreste und Ethylphenylreste; und Aralkylreste, wie der Benzylrest und der α- und der β-Phenylethylrest.

Schon wegen der leichteren Zugänglichkeit sind vorzugsweise mindestens 50 %, insbesondere mindestens 80 %, der Anzahl der Reste R in den erfindungsgemäßen, Estergruppen aufweisenden Organopolysiloxanen Methylreste.

Beispiele für Reste $R^1$ sind Reste der Formel -CR'H- mit R' gleich Wasserstoffatom oder einwertigem organischen Rest, wie $-CH_2-$, $-CH(CH_3)-$, $-CH(CH_2CH_3)-$ und

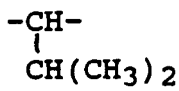 ,

sowie $-C(CH_3)_2-$,

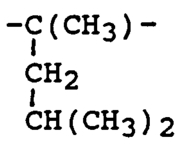 und 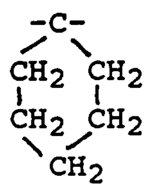 .

Bei Rest $R^1$ handelt es sich bevorzugt um den Methylen- und den 1,1-Ethylenrest, wobei der Methylenrest besonders bevorzugt ist.

Beispiele für Reste $R^2$ sind Reste der Formel $-CR''H-CH_2-$ mit R'' gleich Wasserstoffatom oder einwertigem organischen Rest, wie 1,2-Ethylen-, 1,2-Propylen- und 1,2-Butylenrest, sowie 1,3-Propylenrest.

Bei Rest $R^2$ handelt es sich bevorzugt um den 1,2-Ethylenrest und den 1,2-Propylenrest.

Beispiele für Reste $R^3$ sind der 1,2-Ethylen-, 1,3-Propylen-, 1,4-Butylen-, 1,5-Pentylen- und der 2,2-Dimethyl-1,3-propylenrest.

Bei Rest $R^3$ handelt es sich bevorzugt um zweiwertige lineare Kohlenwasserstoffreste mit 2 bis 6 Kohlenstoffatomen, wobei die 1,3-Propylen- und 1,5-Pentylenreste besonders bevorzugt sind.

Die Bedeutung von c ist bevorzugt 0.

Die Summe aus v und w ist bevorzugt 0 oder eine ganze Zahl von 1 bis 8, besonders bevorzugt 0 oder eine ganze Zahl von 1 bis 4.

Bei s bzw. t handelt es sich jeweils bevorzugt um 0 oder eine ganze Zahl von 1 bis 6, wobei 0 oder eine ganze Zahl von 1 bis 3 besonders bevorzugt ist.

Die Summe aus s und t ist bevorzugt eine ganze Zahl von 1 bis 10, besonders bevorzugt eine ganze Zahl von 1 bis 5.

Der durchschnittliche Wert von a ist bevorzugt 1 bis 2,5, besonders bevorzugt 1,5 bis 2,0.

Der durchschnittliche Wert von b ist bevorzugt 0,04 bis 1,0, besonders bevorzugt 0,1 bis 0,5.

Die Summe aus x und y ist bevorzugt 2.

In Einheiten der Formel (I) mit b verschieden 0 hat b vorzugsweise die Bedeutung von 1.

Beispiele für Reste A der Formel (II) sind

$$a)\quad -CH=CH-CH_2O-(CH_2CH_2O)_{1,1}-(\overset{O}{\overset{\|}{C}}-(CH_2)_5-)_{10}OH \quad ,$$

$$b)\quad CH_2=\overset{|}{C}-CH_2O-(CH_2CH_2O)_{1,1}-(\overset{O}{\overset{\|}{C}}-(CH_2)_5-)_{10}OH \quad ,$$

$$c)\quad \begin{array}{l} -C-CH_2O-(CH_2CH_2O)_2-(\overset{O}{\overset{\|}{C}}-(CH_2)_5-)_2OH \\ \;\| \\ CH-CH_2O-(CH_2CH_2O)_2-(\overset{O}{\overset{\|}{C}}-(CH_2)_5-)_2OH \end{array} \quad \text{und}$$

$$d)\quad \begin{array}{l} -C-\overset{CH_3}{\overset{|}{C}}HO-(CH_2CH_2O)-(\overset{O}{\overset{\|}{C}}-(CH_2)_5-)OH \\ \;\| \\ CH-\underset{CH_3}{\underset{|}{C}}HO-(CH_2CH_2O)-(\overset{O}{\overset{\|}{C}}-(CH_2)_5-)OH \end{array} \quad .$$

Die erfindungsgemäßen, Estergruppen aufweisenden Organopolysiloxane haben ein Molekulargewicht von vorzugsweise 500 bis 100 000, wobei 1 000 bis 10 000 besonders bevorzugt ist.

Beispiele für die erfindungsgemäßen, Estergruppen aufweisenden Organopolysiloxane sind $A-(SiMe_2O)_{50}SiMe_2-A$, $A-(SiMe_2O)_{20}(SiMePhO)_4SiMe_2-A$, $[A-(SiMe_2O)_{12}]_4Si$, $[A-(SiMe_2O)_{30}]_3SiMe$, $A-(SiMe_2O)_{60}-(ASiMeO)_4SiMe_2-A$, $A-SiMe_2O(ASiMeO)_{10}SiMe_2-A$, $(ASiMeO)_4$, $A(SiMe_2O)_{50}SiMe_3$, $Me_3SiO(SiMe_2O)_{100}-(ASiMeO)_5SiMe_3$ und $Me_3SiO(ASiMeO)_{10}SiMe_3$, wobei A die obengenannte Bedeutung hat und Me Methylrest und Ph Phenylrest bedeutet.

Die erfindungsgemäßen, Estergruppen aufweisenden Organopolysiloxane haben bei 25 °C eine Viskosität von vorzugsweise 10 bis 1 000 000 $mm^2/s$. Je nach Zusammensetzung können sie wachsartige Konsistenz bis ausgeprägten Feststoffcharakter haben mit Schmelzpunkten bis über 100 °C.

Gegenstand der Erfindung ist ein Verfahren zur Herstellung von Estergruppen aufweisenden Organopolysiloxanen, dadurch gekennzeichnet, daß
organische Verbindung (1) der allgemeinen Formel

$$\begin{array}{l} CH_{1-x}[R^1O(R^2O)_vH]_x \\ ||| \\ CH_{1-y}[R^1O(R^2O)_wH]_y \end{array} \qquad (III),$$

worin $R^1$, $R^2$, v, w, x und y die oben dafür angegebene Bedeutung haben,
mit Organopolysiloxan (2) aus Einheiten der allgemeinen Formel

$$R_aH_bSiO_{\frac{4-a-b}{2}} \qquad (IV),$$

wobei R, a und b die oben dafür angegebene Bedeutung haben, mit der Maßgabe, daß die Summe aus a+b kleiner oder gleich 3 ist und das Siloxanmolekül mindestens ein Si-gebundenes Wasserstoffatom

aufweist,
und mit cyclischem Ester (4) der Formel

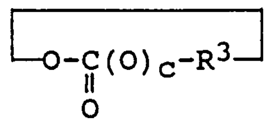 (V),

wobei c und $R^3$ die oben dafür angegebene Bedeutung haben, in Gegenwart von die Anlagerung von Si-gebundenem Wasserstoff an aliphatische Mehrfachbindung förderndem Katalysator (3) sowie eines Ringöffnungskatalysators (5) umgesetzt wird.

Die bei dem erfindungsgemäßen Verfahren eingesetzten organischen Verbindungen (1) sind handelsübliche Produkte oder werden nach in der organischen Chemie gängigen Methoden hergestellt. So wird beispielsweise organische Verbindung (1) mit v + w größer 0 vorzugsweise durch Umsetzung einer Hydroxyalkinverbindung der allgemeinen Formel

$$\begin{array}{l} CH_{1-x}[R^1OH]_x \\ \equiv \\ CH_{1-y}[R^1OH]_y \end{array} ,$$

wobei $R^1$, x und y die oben dafür angegebene Bedeutung haben, mit Alkylenoxid in Gegenwart eines elektrophilen Katalysators, wie in DE 39 40 536 A bzw. der entsprechenden US 5,151,473 A beschrieben, hergestellt.

Bevorzugt wird als Organopolysiloxan (2) solches aus Einheiten $R_3SiO_{1/2}$, $R_2SiO_{2/2}$, $RHSiO_{2/2}$, wobei R die oben angegebene Bedeutung hat, eingesetzt.

Die Viskosität der Organopolysiloxane (2) beträgt vorzugsweise 1 bis 10 000 $mm^2/s$, besonders bevorzugt 5 bis 250 $mm^2/s$, jeweils bezogen auf eine Temperatur von 25 °C.

Bevorzugte Beispiele für Organopolysiloxane (2) sind Mischpolymerisate aus Trimethylsiloxan-, Dimethylsiloxan- und Methylhydrogensiloxaneinheiten.

Die erfindungsgemäßen Organopolysiloxane (2) sind handelsübliche Produkte oder nach in der Silicium-Chemie gängigen Methoden herstellbar.

Bei dem erfindungsgemäßen Verfahren können als Katalysatoren (3) die gleichen Katalysatoren eingesetzt werden, die auch bisher zur Förderung der Anlagerung von Si-gebundenem Wasserstoff an aliphatische Mehrfachbindung eingesetzt werden konnten.

Bei den Katalysatoren (3) handelt es sich vorzugsweise um ein Metall aus der Gruppe der Platinmetalle oder um eine Verbindung oder einen Komplex aus der Gruppe der Platinmetalle.

Beispiele für solche Katalysatoren sind metallisches und feinverteiltes Platin, das sich auf Trägern, wie Siliciumdioxid, Aluminiumoxid oder Aktivkohle befinden kann, Verbindungen oder Komplexe von Platin, wie Platinhalogenide, z.B. $PtCl_4$, $H_2PtCl_6 \cdot 6H_2O$, $Na_2PtCl_4 \cdot 4H_2O$, Platin-Olefin-Komplexe, Platin-Alkohol-Komplexe, Platin-Alkoholat-Komplexe, Platin-Ether-Komplexe, Platin-Aldehyd-Komplexe, Platin-Keton-Komplexe, einschließlich Umsetzungsprodukten aus $H_2PtCl_6 \cdot 6H_2O$ und Cyclohexanon, Platin-Vinylsiloxankomplexe, wie Platin-1,3-Divinyl-1,1,3,3-tetramethyldisiloxankomplexe mit oder ohne Gehalt an nachweisbarem anorganisch gebundenen Halogen, Dicyclopentadienplatindichlorid sowie Umsetzungsprodukte von Platintetrachlorid mit Olefin.

Der Katalysator (3) wird vorzugsweise in Mengen von 1 bis 1 000 Gew.-ppm (Gewichtsteilen je Million Gewichtsteilen), bevorzugt in Mengen von 5 bis 50 Gew.-ppm, jeweils berechnet als das elementare Platinmetall und bezogen auf das Gesamtgewicht von organischer Verbindung (1) und Organopolysiloxan (2), eingesetzt.

Bevorzugt wird organische Verbindung (1) in Mengen von 1,03 bis 1,10 Mol je Grammatom Si-gebundenem Wasserstoff im Organopolysiloxan (2) eingesetzt.

Bevorzugt handelt es sich bei den cyclischen Estern (4) um ε-Caprolacton, δ-Valerolacton, γ-Butyrolacton, Ethylencarbonat und Propylencarbonat, wobei ε-Caprolacton besonders bevorzugt ist.

Bevorzugt wird cyclischer Ester (4) in Mengen von 1,0 bis 5,0 Mol, bezogen auf Mol über Si-C gebundene Hydroxylgruppen, eingesetzt.

Als Katalysator (5) können bei dem erfindungsgemäßen Verfahren alle bisher bekannten Katalysatoren, die zur Ringöffnung von cyclischen Estern verwendet wurden, eingesetzt werden, bevorzugt in organischen

Gemischen lösliche Lewissäure mittlerer Stärke.

Vorzugsweise handelt es sich bei Katalysator (5) um Zinnverbindungen, wie Di-n-butylzinnoctoat, Di-n-butylzinnacetat oder Di-n-butylzinndimethoxid, sowie Titanverbindungen, wie Tetraethyltitanat, Tetraisopropyltitanat oder Tetra-n-butyltitanat, wobei Tetra-n-butyltitanat besonders bevorzugt ist.

Der Katalysator (5) wird vorzugsweise in Mengen von 50 bis 5 000 Gew.-ppm (Gewichtsteilen je Million Gewichtsteilen), bevorzugt in Mengen von 200 bis 1 000 Gew.-ppm, bezogen auf das Gesamtgewicht der gesamten Reaktionsmasse, eingesetzt.

Das erfindungsgemäße Verfahren wird vorzugsweise beim Druck der umgebenden Atmosphäre, also etwa bei 900 bis 1100 hPa, und bei einer Temperatur von vorzugsweise 80 °C bis 180 °C, besonders bevorzugt 120 °C bis 150 °C, durchgeführt.

Bei den bevorzugten Ausführungsformen des erfindungsgemäßen Verfahrens erfolgt die Umsetzung stufenweise.

**Verfahren (a)**

Gegenstand der Erfindung ist ein Verfahren zur Herstellung der Estergruppen aufweisenden Organopolysiloxane, dadurch gekennzeichnet, daß
in einer 1. Stufe
organische Verbindung (1) mit Organopolysiloxan (2) in Gegenwart von die Anlagerung von Si-gebundenem Wasserstoff an aliphatische Mehrfachbindung förderndem Katalysator (3) umgesetzt wird und
in einer 2. Stufe
das in der 1. Stufe erhaltene Additionsprodukt mit cyclischem Ester (4) in Gegenwart von Ringöffnungskatalysator (5) umgesetzt wird.

Wird bei dem erfindungsgemäßen Verfahren (a) organische Verbindung (1) der Formel (III) mit x + y gleich 1 eingesetzt, so entstehen bei der Umsetzung mit Organopolysiloxan (2) folgende isomere Reste $-CH=CH[R^1OH]$ und

$$H_2C=C[R^1OH].$$

Die 1. Stufe des erfindungsgemäßen Verfahrens (a) wird vorzugsweise beim Druck der umgebenden Atmosphäre, also etwa bei 900 bis 1100 hPa, und einer Temperatur von vorzugsweise 80 °C bis 140 °C, besonders bevorzugt 110 °C bis 140 °C, durchgeführt.

Die 2. Stufe des erfindungsgemäßen Verfahrens (a) wird vorzugsweise beim Druck der umgebenden Atmosphäre, also etwa bei 900 bis 1100 hPa, und einer Temperatur von vorzugsweise 80 °C bis 180 °C, besonders bevorzugt 120 °C bis 150 °C, durchgeführt.

Des weiteren ist es möglich, zuerst Verbindung (1) mit dem cyclischen Ester umzusetzen und anschließend das Umsetzungsprodukt mit dem Organopolysiloxan (2) reagieren zu lassen. Diese Variante ist insbesondere dann bevorzugt, wenn Ringöffnungskatalysatoren verwendet werden, die mit Organopolysiloxanen nicht oder schlecht verträglich sind.

**Verfahren (b)**

Gegenstand der Erfindung ist ein Verfahren zur Herstellung der Estergruppen aufweisenden Organopolysiloxane, dadurch gekennzeichnet, daß
in einer 1. Stufe
organische Verbindung (1) mit cyclischem Ester (4) in Gegenwart von Ringöffnungskatalysator (5) umgesetzt wird und
in einer 2. Stufe
das in der 1. Stufe erhaltene Umsetzungsprodukt mit Organopolysiloxan (2) in Gegenwart von die Anlagerung von Si-gebundenem Wasserstoff an aliphatische Mehrfachbindung förderndem Katalysator (3) umgesetzt wird.

Wird in der 1. Stufe des erfindungsgemäßen Verfahrens (b) organische Verbindung (1) der Formel (III) mit x + y gleich 1, beispielsweise wenn x = 0 und y = 1, eingesetzt, so entstehen bei der Reaktion des in der 1. Stufe erhaltenen Umsetzungsproduktes mit Organopolysiloxan (2) folgende isomere Reste A

$$-CH=CH[R^1O(R^2O)_w(\overset{\overset{O}{\|}}{C}(O)_cR^3O)_tH]$$

und

$$H_2C=\underset{|}{C}[R^1O(R^2O)_w(\underset{\underset{O}{\|}}{C}(O)_cR^3O)_tH].$$

Die 1. Stufe des erfindungsgemäßen Verfahrens (b) wird vorzugsweise beim Druck der umgebenden Atmosphäre, also etwa bei 900 bis 1100 hPa, und einer Temperatur von vorzugsweise 80 °C bis 180 °C, besonders bevorzugt 120 °C bis 150 °C, durchgeführt.

Die 2. Stufe des erfindungsgemäßen Verfahrens (b) wird vorzugsweise beim Druck der umgebenden Atmosphäre, also etwa bei 900 bis 1100 hPa, und einer Temperatur von vorzugsweise 80 °C bis 140 °C, besonders bevorzugt 110 °C bis 140 °C, durchgeführt.

Bei dem erfindungsgemäßen Verfahren können auch noch weitere Stoffe, wie zum Beispiel organische Lösungsmittel, eingesetzt werden. Im Falle von Unverträglichkeiten der Ausgangsstoffe haben diese organischen Lösungsmittel die Funktion von Kompatibilisatoren.

Bei dem erfindungsgemäßen Verfahren, sowohl bei der einstufigen als auch bei den beiden zweistufigen Varianten, ist der Einsatz von organischem Lösungsmittel bevorzugt. Vorzugsweise werden beide Stufen der zweistufigen Verfahren (a) und (b) in Anwesenheit von organischem Lösungsmittel durchgeführt.

Bei den organischen Lösungsmitteln handelt es sich bevorzugt um mittelpolare organische Lösungsmittel mit einem Siedepunkt bei einem Druck der umgebenden Atmosphäre von über 100 °C, die mit den Reaktionskomponenten über 80 °C separat mindestens im Gewichtsverhältnis 1 : 1 klar mischbar sind.

Beispiele für solche Lösungsmittel sind Ketone, wie Pentan-3-on, Cyclohexanon, 3,3,5-Trimethylcyclohexanon und Isophoron, und Ether, wie Dioxan, Diethylenglycoldiethylether, Triethylenglycoldimethylether und Polyethylenglycoldimethylether, wobei Cyclohexanon und Isophoron besonders bevorzugt sind.

Falls organisches Lösungsmittel eingesetzt wird, wird es in Mengen von vorzugsweise 10 bis 50 Gewichtsprozent, besonders bevorzugt 10 bis 30 Gewichtsprozent, jeweils bezogen auf das Gesamtgewicht der Reaktionsmasse, eingesetzt.

Zur Isolierung der reinen, erfindungsgemäßen, Estergruppen aufweisenden Organopolysiloxane wird das gegebenenfalls verwendete organische Lösungsmittel vorzugsweise im Vakuum bei einer Temperatur von ca. 140 °C destillativ entfernt.

Die erfindungsgemäßen, Estergruppen aufweisenden Organopolysiloxane haben den Vorteil, daß sie keine nachweisbaren Mengen an Si-O-C-Verknüpfungen haben, wodurch sie hydrolyse- und viskositätsstabil sind. Des weiteren haben die erfindungsgemäßen Organopolysiloxane mit Resten A der Formel (II) mit $x = y = 1$ den Vorteil, daß sie eine sehr hohe Konzentration von Esterseitengruppen pro Siliciumatom aufweisen.

Das erfindungsgemäße Verfahren hat den Vorteil, daß infolge des Hydrosilylierungsschritts an der Kohlenstoff-Kohlenstoff-Dreifachbindung keine Reaktion mit freien OH-Gruppen, wie etwa Wasserstoffabspaltung, eintritt. Daher können die Produkte der 1. Stufe des erfindungsgemäßen Verfahrens (a) direkt, gegebenenfalls im Eintopfverfahren, mit cyclischen Estern weiter umgesetzt werden. Diese Nebenreaktion findet im erfindungsgemäßen Verfahren (b) in der 2. Stufe ebenso wenig statt, sofern ein Molverhältnis C≡C : Si-H ≧ 1,03 eingehalten wird.

Die erfindungsgemäßen, Estergruppen aufweisenden Organopolysiloxane können als Entschäumer in unpolaren oder wenig polaren Medien, wie beispielsweise Kraftstoffen, Rohölen oder Silikonölen, als Verlaufshilfsmittel in Formulierung zur Beschichtung von Oberflächen, als Agens zur Steuerung der Rheologie von Flüssigkeiten und zur Vermeidung von Aerosolbildung aufgrund mechanischer Einwirkung auf Flüssigkeiten sowie als Kompatibilisatoren in Flüssigkeiten oder Pasten, die aus Organosiliciumverbindungen und organischen Polymeren zusammengesetzt sind, eingesetzt werden.

In den nachstehend beschriebenen Beispielen beziehen sich alle Angaben von Teilen und Prozentsätzen, falls nicht anders angegeben, auf das Gewicht. Des weiteren beziehen sich alle Viskositätsangaben auf eine Temperatur von 25 °C (gemessen im U-Rohr). Sofern nicht anders angegeben, wurden die nachstehenden Beispiele bei einem Druck der umgebenden Atmosphäre, also etwa 1000 hPa, und bei Raumtemperatur, also bei etwa 20 °C, bzw. bei einer Temperatur, die sich beim Zusammengeben der Reaktanden bei Raumtemperatur ohne zusätzliche Heizung oder Kühlung einstellt, durchgeführt.

**Beispiel 1**

In 71 g 3,3,5-Trimethylcyclohexanon werden 38 g ε-Caprolacton und 65 g ethoxyliertes But-2-in-1,4-diol mit durchschnittlichem Molekulargewicht von 184 (erhältlich bei der BASF AG unter der Bezeichnung Golpanol BEO) homogen vermischt. Unter Stickstoffatmosphäre werden 3 mg Platin in Form eines 1,3-Divinyltetramethyldisiloxankomplexes gelöst in diesem Liganden (Karstedt-Katalysator) zugegeben und auf 130 °C erwärmt. Bei dieser Temperatur werden über ca. 1 Stunde verteilt insgesamt 111 g eines Equilibrats aus Trimethylsiloxy-, Dimethylsiloxy- und Hydrogenmethylsiloxyeinheiten mit einem Aktivwasserstoffgehalt von 0,3 % und einer Viskosität von 50 $mm^2/s$ zudosiert. Wenn nach einer weiteren Stunde die Reaktion beendet ist, werden 400 mg Tetra-n-butyltitanat hinzugegeben und damit die Ringöffnungspolymerisation des Lactons gestartet, die nach 3 Stunden beendet ist. Das so erhaltene, Estergruppen aufweisende Organopolysiloxan hat als 75 %ige Lösung in 3,3,5-Trimethylcyclohexanon eine Viskosität von 530 $mm^2/s$ und einen Siliciumgehalt von ca. 17 %, bezogen auf das reine Polymer. Durchschnittlich wird eine Lactoneinheit auf jede zweite OH-Gruppe gepfropft.

**Beispiel 2**

58 g 3,3,5-Trimethylcyclohexanon werden mit 65 g ethoxyliertem But-2-in-1,4-diol mit durchschnittlichem Molekulargewicht von 184 (erhältlich bei der BASF AG unter der Bezeichnung Golpanol BEO) homogen vermischt. Unter Stickstoffatmosphäre werden 3 mg Platin in Form des in Beispiel 1 beschriebenen Karstedt-Katalysators zugegeben und auf 130 °C erwärmt. Bei dieser Temperatur werden über ca. 1 Stunde verteilt insgesamt 111 g eines Equilibrats aus Trimethylsiloxy-, Dimethylsiloxy- und Hydrogenmethylsiloxyeinheiten mit einem Aktivwasserstoffgehalt von 0,3 % und einer Viskosität von 50 $mm^2/s$ zudosiert. Wenn nach einer weiteren Stunde die Reaktion beendet ist, wird ein Gemisch aus 38 g ε-Caprolacton mit 13 g Trimethylcyclohexanon sowie 400 mg Tetra-n-butyltitanat hinzugegeben und damit die Ringöffnungspolymerisation des Lactons gestartet, die nach 3 Stunden beendet ist. Das so erhaltene, Estergruppen aufweisende Organopolysiloxan hat als 75 %ige Lösung in 3,3,5-Trimethylcyclohexanon eine Viskosität von 530 $mm^2/s$ und einen Siliciumgehalt von ca. 17 %, bezogen auf das reine Polymer. Durchschnittlich wird eine Lactoneinheit auf jede zweite OH-Gruppe gepfropft.

**Beispiel 3**

71 g 3,3,5-Trimethylcyclohexanon werden mit 65 g ethoxyliertem But-2-in-1,4-diol mit durchschnittlichem Molekulargewicht von 184 (erhältlich bei der BASF AG unter der Bezeichnung Golpanol BEO) homogen vermischt. Unter Stickstoffatmosphäre werden 3 mg Platin in Form des in Beispiel 1 beschriebenen Karstedt-Katalysators zugegeben und auf 130 °C erwärmt. Bei dieser Temperatur werden über ca. 1 Stunde verteilt insgesamt 111 g eines Equilibrats aus Trimethylsiloxy-, Dimethylsiloxy- und Hydrogenmethylsiloxyeinheiten mit einem Aktivwasserstoffgehalt von 0,3 % und einer Viskosität von 50 $mm^2/s$ zudosiert. Wenn nach einer weiteren Stunde die Reaktion beendet ist, wird ein Gemisch aus 118 g ε-Caprolacton mit 27 g Trimethylcyclohexanon sowie 300 mg Tetra-n-butyltitanat hinzugegeben und auf 149 °C erhitzt. Die Ringöffnungspolymerisation des Lactons ist nach 3 Stunden beendet, wobei die Viskosität des Reaktionsgemisches 770 $mm^2/s$ erreicht hat (Festkörpergehalt 75 %). Das erfindungsgemäße Organopolysiloxan enthält pro freier OH-Gruppe 1,45 Estergruppen und hat einen Siliciumgehalt von 11 %, bezogen auf das reine Polymer.

**Beispiel 4**

43 g But-2-in-1,4-diol werden mit 228 g ε-Caprolacton und 0,2 g Tetra-n-butyltitanat vermischt und 3 Stunden auf 135 °C erwärmt. Das $^1H$-NMR-Spektrum zeigt durch das Fehlen des Signals bei 2,6 ppm den vollständigen Verbrauch des Lactons. Dieses Vorprodukt enthält durchschnittlich 2 Estergruppen pro freier Hydroxyendgruppe. Nun werden als Lösungsvermittler 140 g Cyclohexanon und als Hydrosilylierungskatalysator 6 mg Platin in Form des in Beispiel 1 beschriebenen Karstedt-Katalysators hinzugegeben. Anschließend werden unter Stickstoffatmosphäre über einen Zeitraum von einer Stunde insgesamt 150 g des in Beispiel 1 beschriebenen Hydrogensiloxans zudosiert und bei 140 °C noch 3 Stunden reagieren gelassen. Das so erhaltene Reaktionsgemisch hat eine Viskosität von 580 $mm^2/s$, das auch nach dem Abkühlen klar bleibt. Die Polyesterseitenketten sind ohne Ethoxylzwischengruppen direkt über den But-2-enspacer hydrolysestabil an Si-Atome gebunden, so daß jedes derivatisierte Si-Atom zwei Polyesterseitenketten mit durchschnittlich je zwei Monomereinheiten gebunden hat.

**Beispiel 5**

43 g ethoxyliertes But-2-in-1,4-diol werden mit 5 mg Platin als $PtCl_4$ in 1 ml 1-Octen gelöst und 122 g Cyclohexanon vermischt. Unter Stickstoffatmosphäre werden bei 130 °C 323 g eines $\alpha,\omega$-Dihydrogenpolydimethylsiloxans mit einer Viskosität von 56 $mm^2/s$ zugetropft, dessen Menge genau 0,20 g Aktivwasserstoff entspricht. Nach Ende der Reaktion hat eine von Lösungsmittel befreite Probe des Öls eine Viskosität von 360 $mm^2/s$. Jedes Molekül hat 2 freie OH-Gruppen pro Kettenende.

Man gibt nun 300 g $\epsilon$-Caprolacton und 100 g Cyclohexanon zu und pfropft das Lacton katalysiert durch 0,8 g Tetra-n-butyltitanat in 3 Stunden bei 140 °C auf die freien Hydroxyenden. Die 75 %ige Lösung des so erhaltenen Organopolysiloxans in Cyclohexanon hat eine Viskosität von 800 $mm^2/s$. Der Polymerisationsgrad der Polyesterenden beträgt durchschnittlich ca. 6.

**Beispiel 6**

Unter Schutzgasatmosphäre werden 225 g eines linearen Equilibrats aus Trimethylsiloxy-, Hydrogendimethylsiloxy- und Dimethylsiloxyeinheiten mit einer Viskosität von 68 $mm^2/s$ und einem Aktivwasserstoffequivalent von 2250 g/Mol Si-H mit 11 g 2-Propargyloxyethanol vermischt. Bei ca. 120 °C gibt man 5 mg Platin in Form des in Beispiel 1 beschriebenen Karstedt-Katalysators zu und läßt 4 Stunden reagieren, wobei die Addition der SiH-Gruppen an die acetylenische Dreifachbindung nahezu quantitativ abläuft. Man dosiert nun 114 g $\epsilon$-Caprolacton zu, das nach Zugabe von 0,2 g Tetra-n-butyltitanat bei 130 °C während 3 Stunden aufgepfropft wird. Nach Abkühlen auf 25 °C erhält man eine gelbe wachsartige Masse, deren 75 %ige Lösung in 3,3,5-Trimethylcyclohexanon eine Viskosität von rund 1100 $mm^2/s$ hat. Der Polymerisationsgrad des Polyesteranteils beträgt durchschnittlich 10.

**Beispiel 7**

Zu 250 g additivfreiem Winterdieselkraftstoff, der ein Aromaten-/Naphthen-/Paraffinverhältnis (bestimmbar nach DIN 51378) von 15/24/61 hat, werden 7,5 Gew.-ppm des Estergruppen aufweisenden Organopolysiloxanes, dessen Herstellung in Beispiel 1 beschrieben ist, in Form einer 10 %igen Lösung in Ethoxypropylacetat gegeben und anschließend in ein 500 ml Druckgefäß überführt. Das Druckgefäß wird rasch verschlossen und die Austrittsöffnung (Durchmesser der Austrittsöffnung = 1 mm) genau über der Mitte eines 500 ml Meßzylinders zentriert. Die Austrittsöffnung und der obere Rand des Meßzylinders liegen dabei in einer Ebene. Unter einem konstanten Preßluftdruck von 1 bar wird dann innerhalb eines über einen Timer gesteuerten Zeitraums von 6 Sekunden die Dieselkraftstoffmischung in den Meßzylinder abgelassen. Gemessen wird die Schaumzerfallszeit in Sekunden. Die Schaumzerfallszeit ist dann beendet, wenn der volle Flüssigkeitsspiegel des Dieselkraftstoffes sichtbar wird. Die Schaumzerfallszeit beträgt 7 Sekunden.

**Vergleichsbeispiel 1**

A

58 g 3,3,5-Trimethylcyclohexanon werden mit 65 g ethoxyliertem But-2-in-1,4-diol mit durchschnittlichem Molekulargewicht von 184 (erhältlich bei der BASF AG unter der Bezeichnung Golpanol BEO) homogen vermischt. Unter Stickstoffatmosphäre werden 3 mg Platin in Form des in Beispiel 1 beschriebenen Karstedt-Katalysators zugegeben und auf 130 °C erwärmt. Bei dieser Temperatur werden über ca. 1 Stunde verteilt insgesamt 111 g eines Equilibrats aus Trimethylsiloxy-, Dimethylsiloxy- und Hydrogenmethylsiloxyeinheiten mit einem Aktivwasserstoffgehalt von 0,3 % und einer Viskosität von 50 $mm^2/s$ zudosiert. Nach einer weiteren Stunde ist die Reaktion beendet.

Die in Beispiel 7 angegebene Verfahrensweise wird wiederholt mit der Abänderung, daß anstelle von 7,5 Gew.-ppm des Estergruppen aufweisenden Organopolysiloxanes, dessen Herstellung in Beispiel 1 beschrieben ist, 7,5 Gew.-ppm des oben unter A hergestellten Organopolysiloxans eingesetzt werden. Die Schaumzerfallszeit beträgt 14 Sekunden.

## Patentansprüche

1. Estergruppen aufweisende Organopolysiloxane aus Einheiten der allgemeinen Formel

$$R_aA_bSiO_{\frac{4-a-b}{2}} \qquad (I),$$

wobei
R gleich oder verschieden sein kann und einwertige, SiC-gebundene Kohlenwasserstoffreste mit 1 bis 18 Kohlenstoffatomen bedeutet,
A gleich oder verschieden sein kann und einen Rest der allgemeinen Formel

$$\begin{array}{l} -CH_{1-x}\{R^1O(R^2O)_v[\overset{O}{\overset{\|}{C}}(O)_cR^3O]_sH\}_x \\ \;\; \| \\ \;\; CH_{2-y}\{R^1O(R^2O)_w[\underset{O}{\underset{\|}{C}}(O)_cR^3O]_tH\}_y \end{array} \qquad (II)$$

bedeutet, worin
$R^1$ gleich oder verschieden sein kann und zweiwertige Kohlenwasserstoffreste mit 1 bis 6 Kohlenstoffatomen bedeutet,
$R^2$ gleich oder verschieden sein kann und zweiwertige Kohlenwasserstoffreste mit 2 bis 4 Kohlenstoffatomen bedeutet,
$R^3$ gleich oder verschieden sein kann und zweiwertige Kohlenwasserstoffreste mit 2 bis 6 Kohlenstoffatomen bedeutet,
c 0 oder 1 ist,
v 0 oder eine ganze Zahl ist,
w 0 oder eine ganze Zahl ist, wobei die Summe aus v und w 0 oder eine ganze Zahl von 1 bis 16 ist,
s 0 oder eine ganze Zahl ist,
t 0 oder eine ganze Zahl ist, wobei die Summe aus s und t eine ganze Zahl von 1 bis 20 ist,
x 0 oder 1 ist,
y 0 oder 1 ist, wobei die Summe aus x und y 1 oder 2 ist,
a 0, 1, 2 oder 3 ist und
b 0, 1 oder 2 ist,
mit der Maßgabe, daß die Summe aus a und b kleiner oder gleich 3 ist und das Organopolysiloxan pro Molekül mindestens einen Rest A aufweist.

2. Estergruppen aufweisende Organopolysiloxane gemäß Anspruch 1, dadurch gekennzeichnet, daß die Summe aus x und y gleich 2 ist.

3. Estergruppen aufweisende Organopolysiloxane gemäß Anspruch 1 oder 2, dadurch gekennzeichnet, daß c gleich 0 ist.

4. Verfahren zur Herstellung von Estergruppen aufweisenden Organopolysiloxanen, dadurch gekennzeichnet, daß organische Verbindung (1) der allgemeinen Formel

$$\begin{array}{l} CH_{1-x}[R^1O(R^2O)_vH]_x \\ \;\; \||| \\ CH_{1-y}[R^1O(R^2O)_wH]_y \end{array} \qquad (III),$$

worin $R^1$, $R^2$, v, w, x und y die oben dafür angegebene Bedeutung haben,
mit Organopolysiloxan (2) aus Einheiten der allgemeinen Formel

$$R_aH_bSiO_{\frac{4-a-b}{2}} \qquad (IV),$$

wobei R, a und b die oben dafür angegebene Bedeutung haben, mit der Maßgabe, daß die Summe aus a + b kleiner oder gleich 3 ist und das Siloxanmolekül mindestens ein Si-gebundenes Wasserstoffatom aufweist,
und mit cyclischem Ester (4) der Formel

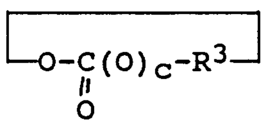

(V),

wobei c und $R^3$ die oben dafür angegebene Bedeutung haben,
in Gegenwart von die Anlagerung von Si-gebundenem Wasserstoff an aliphatische Mehrfachbindung förderndem Katalysator (3) sowie eines Ringöffnungskatalysators (5) umgesetzt wird.

**5.** Verfahren nach Anspruch 4, dadurch gekennzeichnet, daß in einer 1. Stufe
organische Verbindung (1) mit Organopolysiloxan (2) in Gegenwart von die Anlagerung von Si-gebundenem Wasserstoff an aliphatische Mehrfachbindung förderndem Katalysator (3) umgesetzt wird und
in einer 2. Stufe
das in der 1. Stufe erhaltene Additionsprodukt mit cyclischem Ester (4) in Gegenwart von Ringöffnungskatalysator (5) umgesetzt wird.

**6.** Verfahren nach Anspruch 4, dadurch gekennzeichnet, daß in einer 1. Stufe
organische Verbindung (1) mit cyclischem Ester (4) in Gegenwart von Ringöffnungskatalysator (5) umgesetzt wird und
in einer 2. Stufe
das in der 1. Stufe erhaltene Umsetzungsprodukt mit Organopolysiloxan (2) in Gegenwart von die Anlagerung von Si-gebundenem Wasserstoff an aliphatische Mehrfachbindung förderndem Katalysator (3) umgesetzt wird.

**7.** Verfahren nach einem oder mehreren der Ansprüche 4 bis 6, dadurch gekennzeichnet, daß zusätzlich organisches Lösungsmittel eingesetzt wird.

**8.** Verfahren zum Entschäumen und/oder Entgasen organischer Systeme durch Zugabe eines Organopolysiloxans gemäß Anspruch 1.

## Claims

**1.** Organopolysiloxanes which contain ester groups and comprise units of the general formula

$$R_aA_bSiO_{\frac{4-a-b}{2}} \qquad (I),$$

in which
- R may at each occurrence be an identical or different monovalent, SiC-bonded hydrocarbon radical having 1 to 18 carbon atoms,
- A may at each occurrence be an identical or different radical of the general formula

$$\begin{array}{l} -CH_{1-x}\{R^1O(R^2O)_v[\overset{O}{\overset{\|}{C}}(O)_cR^3O]_sH\}_x \\ \;\;\| \\ \;\;CH_{2-y}\{R^1O(R^2O)_w[\underset{O}{\underset{\|}{C}}(O)_cR^3O]_tH\}_y \end{array} \qquad (II)$$

in which

- $R^1$ may at each occurrence be an identical or different divalent hydrocarbon radical having 1 to 6 carbon atoms,
- $R^2$ may at each occurrence be an identical or different divalent hydrocarbon radical having 2 to 4 carbon atoms,
- $R^3$ may at each occurrence be an identical or different divalent hydrocarbon radical having 2 to 6 carbon atoms,
- c is 0 or 1,
- v is 0 or an integer,
- w is 0 or an integer, the sum of v and w being 0 or an integer from 1 to 16,
- s is 0 or an integer,
- t is 0 or an integer, the sum of s and t being an integer from 1 to 20,
- x is 0 or 1,
- y is 0 or 1, the sum of x and y being 1 or 2,
- a is 0, 1, 2 or 3, and
- b is 0, 1 or 2,

with the proviso that the sum of a and b is less than or equal to 3 and the organopolysiloxane contains at least one radical A per molecule.

2. Organpolysiloxanes which contain ester groups according to Claim 1, characterized in that the sum of x and y is 2.

3. Organopolysiloxanes which contain ester groups according to Claim 1 or 2, characterized in that c is 0.

4. Process for the preparation of organopolysiloxanes which contain ester groups, characterized in that organic compound (1) of the general formula

$$\begin{array}{l} CH_{1-x}[R^1O(R^2O)_vH]_x \\ \;\;\||| \\ CH_{1-y}[R^1O(R^2O)_wH]_y \end{array} \qquad (III),$$

in which $R^1$, $R^2$, v, w, x and y are as defined above,
is reacted with organopolysiloxane (2) comprising units of the general formula

$$R_aH_bSiO_{\frac{4-a-b}{2}} \qquad (IV),$$

in which R, a and b are as defined above, with the proviso that the sum of a+b is less than or equal to 3 and the siloxane molecule contains at least one Si-bonded hydrogen atom,
and with cyclic ester (4) of the formula

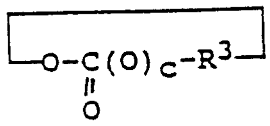

(V),

in which c and $R^3$ are as defined above,
in the presence of a catalyst (3) which promotes the addition of Si-bonded hydrogen at an aliphatic multiple bond, and of a ring-opening catalyst (5).

**5.** Process according to Claim 4, characterized in that
in a 1st stage
organic compound (1) is reacted with organopolysiloxane (2) in the presence of a catalyst (3) which promotes the addition of Si-bonded hydrogen at an aliphatic multiple bond, and
in a 2nd stage
the addition product obtained in the 1st stage is reacted with cyclic ester (4) in the presence of ring-opening catalyst (5).

**6.** Process according to Claim 4, characterized in that in a 1st stage
organic compound (1) is reacted with cyclic ester (4) in the presence of ring-opening catalyst (5) and
in a 2nd stage
the reaction product obtained in the 1st stage is reacted with organopolysiloxane (2) in the presence of a catalyst (3) which promotes the addition of Si-bonded hydrogen at an aliphatic multiple bond.

**7.** Process according to one or more of Claims 4 to 6, characterized in that organic solvent is additionally employed.

**8.** Method of defoaming and/or degassing organic systems by adding an organopolysiloxane according to Claim 1.

## Revendications

**1.** Organopolysiloxane présentant des groupements ester, à partir d'unités de formule générale :

$$R_aA_bSiO_{\frac{4-a-b}{2}} \qquad (I),$$

où :

R peut être identique ou différent et représente un radical hydrocarbure monovalent à liaison Si-C, de 1 à 18 atomes de carbone;

A peut être identique ou différent et représente un radical de formule générale :

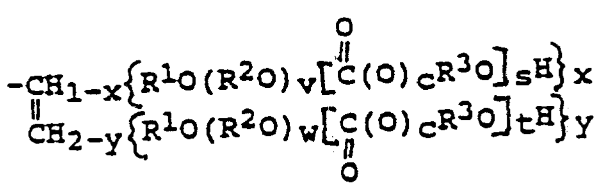

(II)

où :

$R^1$ peut être identique ou différent et représente un radical hydrocarbure bivalent de 1 à 6 atomes de carbone;

$R^2$ peut être identique ou différent et représente un radical hydrocarbure bivalent de 2 à 4 atomes de carbone;

$R^3$ peut être identique ou différent et représente un radical hydrocarbure bivalent de 2 à 6 atomes

de carbone;

c est 0 ou 1;

v est 0 ou un nombre entier;

w est 0 ou un nombre entier, où la somme de v et de w est 0 ou un nombre entier de 1 à 16;

s est 0 ou un nombre entier;

t est 0 ou un nombre entier, où la somme de s et de t est un nombre entier de 1 à 20;

x est 0 ou 1;

y est 0 ou 1, où la somme de x et de y est 1 ou 2;

a est 0, 1, 2 ou 3, et

b est 0, 1 ou 2,

pourvu que la somme de a et de b soit égale ou inférieure à 3 et que l'organopolysiloxane présente au moins un radical A par molécule.

2. Organopolysiloxane présentant des groupements ester suivant la revendication 1, caractérisé en ce que la somme de x et de y est égale à 2.

3. Organopolysiloxane présentant des groupements ester suivant la revendication 1 ou 2, caractérisé en ce que c est égal à 0.

4. Procédé de préparation d'organopolysiloxanes présentant des groupements ester, caractérisé en ce que le composé organique (1) de formule générale :

$$\begin{array}{l} CH_{1-x}[R^1O(R^2O)_vH]_x \\ \| \\ CH_{1-y}[R^1O(R^2O)_wH]_y \end{array} \qquad (III),$$

où $R^1$, $R^2$, v, w, x et y ont les significations données ci-dessus,

est mis à réagir avec :

un organopolysiloxane (2) d'unités de formule générale :

$$R_aH_bSiO_{\frac{4-a-b}{2}} \qquad (IV),$$

où R, a et b ont les significations données ci-dessus, pourvu que la somme a + b soit égale ou inférieure à 3 et que la molécule siloxane présente au moins un atome d'hydrogène lié à Si, et

avec un ester cyclique (4) de formule :

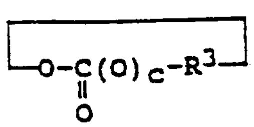

(V),

où c et $R^3$ ont les significations données ci-dessus,

en présence d'un catalyseur (3) accélérant l'addition d'un hydrogène lié à Si sur une liaison multiple aliphatique, ainsi que d'un catalyseur d'ouverture de cycle (5).

5. Procédé suivant la revendication 4, caractérisé en ce que :

au cours d'une première étape, le compose organique (1) est mis à réagir avec l'organopolysiloxane (2) en présence d'un catalyseur (3) accélérant l'addition d'un hydrogène lié à Si sur une liaison multiple aliphatique, et

au cours d'une deuxième étape, le produit d'addition obtenu à l'étape 1 est mis a réagir avec l'ester cyclique (4) en présence du catalyseur d'ouverture de cycle (5).

6. Procédé suivant la revendication 4, caractérisé en ce que :
au cours d'une première étape, le composé organique (1) est mis à réagir avec l'ester cyclique (4) en présence du catalyseur d'ouverture de cycle (5), et
au cours d'une deuxième étape, le produit d'addition obtenu à l'étape 1 est mis à réagir avec l'organopolysiloxane (2) en présence d'un catalyseur (3) accélérant l'addition d'un hydrogène lié à Si sur une liaison multiple aliphatique.

7. Procédé suivant l'une ou plusieurs des revendications 4 à 6, caractérisé en ce que l'on introduit, en outre, un solvant organique.

8. Procédé de démoussage et/ou de dégazage d'un système organique par addition d'un organopolysiloxane suivant la revendication 1.